(19) Europäisches Patentamt
European Patent Office
Office européen des brevets

(11) **EP 2 446 141 B1**

(12) **EUROPEAN PATENT SPECIFICATION**

(45) Date of publication and mention of the grant of the patent:
**28.02.2018 Bulletin 2018/09**

(21) Application number: **10792574.5**

(22) Date of filing: **22.06.2010**

(51) Int Cl.:
***F03D 1/00*** *(2006.01)*

(86) International application number:
**PCT/US2010/039487**

(87) International publication number:
**WO 2010/151540 (29.12.2010 Gazette 2010/52)**

(54) **WIND TURBINE**

WINDTURBINE

EOLIENNE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **22.06.2009 US 269183 P**

(43) Date of publication of application:
**02.05.2012 Bulletin 2012/18**

(73) Proprietor: **Stimm, Kean W.**
**Williamsville, NY 14221 (US)**

(72) Inventor: **Stimm, Kean W.**
**Williamsville, NY 14221 (US)**

(74) Representative: **WSL Patentanwälte Partnerschaft mbB**
**Kaiser-Friedrich-Ring 98**
**65185 Wiesbaden (DE)**

(56) References cited:
| | |
|---|---|
| **WO-A1-87/07328** | **WO-A1-2009/146541** |
| **DE-C- 712 532** | **FR-A- 1 290 018** |
| **US-A- 4 720 640** | **US-A- 6 042 333** |
| **US-A1- 2004 160 063** | **US-A1- 2004 247 438** |
| **US-A1- 2009 121 482** | |

## Description

CROSS-REFERENCE TO RELATED APPLICATIONS

This application claims the benefit under 35 U.S.C. §119(e) of U.S. Provisional Application No. 61/269,183 filed on June 22, 2009 which application is incorporated herein by reference.

TECHNICAL FIELD

The invention broadly relates to wind turbines, more specifically to a wind turbine designed to extract more energy from the wind by use of Newton's First Law of Linear Motion, and even more particularly to a wind turbine having a rotatable hub with an enclosure surrounding the tips of the blades, and being connected to them, which blades cause a moving mass of air, as wind, to be driven out of its path of motion to create the force that drives the turbine smoothly and efficiently with little turbulence.

BACKGROUND ART

Mankind has been using various types of rotary devices to extract energy from the wind for centuries. The types of mechanisms used include a multiple blade arrangement that rotates around a central axis. The apparatus may be configured with either a vertical axis or a horizontal axis. The horizontal axis type includes both windmills and wind turbines. The vertical axis devices generally provide methods that have more resistance to the wind on one side of the axis and less resistance on the other half such that the difference in wind resistance allows the unit to turn, and as a result, they exhibit significant inefficiencies. Horizontal axis windmills are usually open blade mechanisms such as for example, the old four blade Dutch windmills, or the modern windmill with three blades, which has been proliferating around the world. The Dutch windmills are, effectively, a reaction type apparatus that relies on the impact of the wind on the angled blade to cause a force to turn the rotor. They are quite inefficient but if made large enough, they can supply some useful work.

Another type of wind device is the multi blade unit used to provide farmers with a means to pump water. This device might have 20, 30, or more blades and develop enough torque to turn a pump. This configuration is, also, a reaction type windmill driven, primarily, by the impact of the wind on an angled blade. This type is very inefficient over a broad wind spectrum and they are noisy and fragile and need to be shut down during periods of sustained high winds

The use of three-blade windmills has become very prominent around the world. Multiple three-blade windmills are usually arranged to establish "Wind Farms". A large wind farm may consist of a few dozen to several hundred individual three- blade windmills, and may cover an extended area of hundreds of square miles. The windmills used for wind farms are of enormous size with a blade swing diameter that ranges around 300 foot. They often rise to heights of 300 feet to 400 feet and require large amounts of land. They utilize the force from Bernoulli's Theorem as it is used to create the lift force on an airplane wing. However, the blades of three-blade turbines occupy only 5% of the blade swing area. Hence, 95% of the kinetic energy in the air mass passes between the blades and is lost. Adding more blades is not the answer as just one more blade causes the efficiency to become even worse. This is because of the enormous turbulence surrounding each blade thus causing interference with the other blades.

The three-blade windmills convert less than 1.4% of the kinetic energy in the wind to useful electrical energy; Yet, three-blade windmills are considered the most economically viable method currently available for generating significant electrical power from the wind. Because three-blade windmills are extremely expensive while being very inefficient, it is mathematically impossible for them to have a reasonable return on investment or a competitive cost for a kilowatt hour of electrical power without government subsidies, grants, and tax abatements. Further, their huge size dominates the skyline so that they are intrusive and can be annoying with flickering shadows, TV interference, and sometimes humming noises. Their very complex design involves thousands of parts, and, usually, adjustable pitch blades driven by expensive servomechanisms.

DE 712 532 discloses a wind mill comprising a set of curved blades mounted on a central rotatable hub, an enclosure surrounding the tips of the blades and attached thereto, which enclosure is arranged to rotate with said hub and said blades. No apparatus controlling speed of rotation of the wind mill is provided.

WO 87/07328 discloses a wind mill comprising a set of curved blades mounted on a central rotatable hub, an enclosure surrounding the tips of the blades and attached thereto, which enclosure is arranged to rotate with said hub and said blades. No apparatus controlling speed of rotation of the wind mill is provided.

FR 1 290 018 discloses a wind mill comprising a set of curved blades mounted on a central rotatable hub, an enclosure surrounding the tips of the blades and attached thereto, which enclosure is arranged to rotate with said hub and said blades. No apparatus controlling speed of rotation of the wind mill is provided.

United States Patent No. 4,021,135 (Pedersen), and United States Patent No. 4,140,433 (Eckel) disclose a device attempting to enhance the Bernoulli effect as used by three-blade windmills by using fixed shrouds around the outside of the blades to funnel more air around the blades. This approach encourages some of the air mass to diverge around the windmill because it perceives a funnel as an obstacle thereby causing a net loss of available kinetic energy. These devices have rotatable blades that are in close proximity to a non rotating shroud, and as a result will experience serious drag and turbulence and thus a loss in efficiency.

Alternate configurations that attempt to provide higher efficiency are disclosed in United States Patent No. 4,611,125 (Stone Jr.), which teaches a concept, which improves airflow, however, still allows a large percentage of the kinetic energy in the wind to bypass the structure unused. In United States Patent No. 7,396,207 (DeLong), the use of sails to augment the amount of wind energy captured is commendable excepting for the practical problems associated with the complexities of continuous adjustment of the sails, handling of storms, and contending with ice and snow. In United States Patent No. 4,150,301 (Bergey), the object has been to provide rotation speed regulation at considerable expense to efficiency. There is little evidence that demonstrates that any of these methods improve efficiency, simplicity, or cost.

United States Patent No. 7,214,029 (Richter) discloses a device that initiates the acceleration of the air mass and implies that the kinetic energy is increased by diverting the air mass around a frontal structure to cause it to concentrate and speed up as it enters a funnel shape and then onto the many multiple blades. This, of course does not increase the kinetic energy in the air mass as per the laws of conservation of energy. Also, this system relies on the reaction force of the wind air mass impacting the angled blades. This is an inefficient method of extracting energy from the wind. Further, the wind will view any structure placed in an open-air environment as an obstacle and divert a substantial percent of that air mass around the obstacle. This is substantially different from such designs being placed in a long tube with forced air being driven through.

United States Patent Application No. 2008/0232957 (Presz), discloses a fixed shroud that surrounds a set of stator blades that direct airflow around a three bladed impeller rotor with mixer air diffused into the after area of the impellers. It is implied that this will increase the energy output of the impeller system by two to three times. However, despite the unsupported allegation, no hard evidence is provided for any such result. It is also implied that the configuration permits the airflow velocity to increase by use of the diffuser system located after the impeller rotor. This supposed increase in velocity, however, becomes a problem for three blade impellers, operating by use of Bernoulli's Theorem, since they cannot tolerate higher air velocity speeds without self destruction. They are also limited by the requirement that the blade tip velocity be seven times the wind speed in order to achieve reasonable efficiency. Further, pitch control of the blades and stator is essential to maximize performance in variable winds. All of this leads to an extremely complicated and costly device for which no actual improvement is shown. The huge shroud portrayed would add substantial weight and structural requirements to this wind turbine and the device would need to have tremendous strength to withstand even ordinary winds.

The rotation of the impeller blades within the fixed shroud would generate significant drag and turbulence between the blade tips and shroud due to air mass being flung outward due to centrifugal and other forces caused by rotation of the impeller rotor and the extraction of energy. It is truly questionable whether any improvements resulting from the device could offset the increased costs and the environmental intrusion of such a structure.

United States Patent No. 4,140,433 (Eckel) discloses a system that provides complex multistage turbines to cause each stage to enhance the wind power. The wind; however, sees this whole turbine as an obstacle to get through. Hence, some of the air stream, and energy, approaching the rotor will divert around the turbine. This theory works for power turbines where hot gasses are forced through as in aircraft jet engines. This approach is highly complex and very expensive without gaining credible efficiency because the many blades also cause drag and turbulence. It should also be noted, that the increased cost and complexity hardly justifies multiple stages, since each subsequent stage must extract energy from air from which energy has already been extracted.

Vertical axis windmills, which rely on providing greater force on one side of the axis than on the other. Examples of vertical axis windmills are shown in United States Patent No. 5,525,037 (Cummings) and United States Patent No. 4,619,585 (Storm). These windmills are notoriously inefficient since there is always drag on the side returning against the wind, which subtracts from the power generating side. Another approach is shown by United States Patent No. 7,362,004 (Becker) utilizing a complex structure to control rotation speed at the expense of drag, turbulence, poor airflow, and many obstructions all of which reduce efficiency. United States Patent No. 7,116,006 (McCoin) provides an ingenious arrangement to convert horizontal airflow to vertically mounted, counter rotating blades, which balance torque on the tower and maximize rotor speed. This is accomplished at great cost to efficiency in part due to the reaction blade system used. These type of mechanisms, generally, create significant turbulence, drag, and interference with the air stream. The many efforts for improvement by adjusting the differential forces on each side of the axis can only be slightly effective since there are so many other factors that can spoil the efficiency. The many patents involving windmills and wind turbines represent attempts at improving ways of better utilizing Bernoulli's theorem, or ways of better using reaction or impact methods as an air mass strikes a surface. Only minor gains are achieved as the basic theorems are highly limited as to the theoretical maximum efficiencies achievable. Further, the many efforts to gain greater efficiency and solve vexing problems, as presented in so many patents, involve astonishingly complex mechanisms which can be troublesome in the harsh environment of windmills. This raises serious questions of long-term cost and maintenance. The calculation of efficiency for a windmill or a wind turbine can be demonstrated by starting with a theoretical maximum output of "100" and then applying the known losses as follows: Three-blade windmills using the Bernoulli Theorem:

$$100 \times 5\% \times 95\% \times 45\% \times 65.5\% = 1.4\%$$

5% is the area of the blades in contact with the wind.

95% is the wind utilized and not bypassed around the blades.

45% is the conversion of kinetic energy to rotor horsepower output.

65.5% remainder after gearbox (10% loss and losses of generator/inverter).

Thus, there is a long felt need for a properly designed wind turbine that can deliver as much as 35% of the wind kinetic energy into useful electrical power, which is 25 times greater than the typical three-blade windmill efficiency of only 1.4%.

There is a further long felt need for a wind turbine that can start generating power at lower wind speeds and continue producing power even during high speed wind storms. Currently, at low wind speeds and during storms, loss of wind power by a three-blade windmill can be estimated at as much as 50%.

There is a further long felt need for a wind turbine which, causes a moving mass of air, as wind, to be driven out of its path of motion to create the force that drives the turbine smoothly and efficiently with little turbulence.

There is a further long felt need for a wind turbine designed much smaller than a three-blade windmill for the same annual megawatt hour output.

DISCLOSURE OF INVENTION

The present invention is a wind turbine according to claim 1.

In some embodiments, the enclosure includes a circumferential sidewall about a central axis, the circumferential sidewall includes a front opening being adapted to face true wind and a rear opening. The sidewall slopes from the front opening to the rear opening such that the rear opening has a larger diameter than the front opening. The sidewall slopes from the front opening to the rear opening at an angle to a plane of the front opening between 100 degrees to 135 degrees and preferably from 107 degrees to 112 degrees.

In some embodiments, each of the blades includes a leading edge and a trailing edge having a surface for receiving wind, wherein the number of blades is sufficient to entirely redirect direct wind impinging upon the turbine. For example, the leading edge of each of the blades may overlap the trailing edge of an adjacent blade by an amount between 14% and 20% of its surface area, but in some circumstances overlap may be as much as 60%.

In some embodiments, each of the blades are twisted such that the tip end of the blade is twisted at an angle to the central axis of an amount between 54 degrees to 64 degrees. Each of the blades is twisted such that the hub end of the blade is twisted at an angle to the central axis of an amount between 28 degrees to 49 degrees.

In some embodiments, the turbine includes a nose cone at the front of the turbine face covering the hub, and which is streamlined to transfer an air mass approaching the turbine to be directed around the hub and into the blades so that kinetic energy in the air mass is captured.

In some embodiments, the turbine is connected to a multi-pole generator having poles connected in series and of sufficient size to provide a higher output voltage relative to the output of a dipole generator. In some embodiments, an inverter is connected to the generator output with means to provide the maximum electrical output of the generator under all normal wind conditions for delivery to the user.

In some embodiments, the control of turbine speed is regulated by a controller that measures generator power output and modifies field current of the generator to load its rotor to regulate rotation speed of the turbine to obtain at least 50% and, preferably at least 80%, of maximum generator power output under all wind conditions.

In some embodiments, the set of fixed pitch blades are shaped with a curvature on a first side and a different curvature on a reverse side to affect the apparent wind as seen by the moving blades of the turbine.

It is an object of the present invention to provide a wind turbine that is ½ to 1/7th the diameter of a three-blade windmill having the same annual megawatt hour output.

It is a further object of the present invention to provide a wind turbine where up to 95% of the wind is utilized and not bypassed around the turbine and at least 35 percent and as much as 50 percent or more is the conversion of kinetic energy to rotor horsepower output. After electro-mechanical losses at least 70 percent of the rotor horsepower output can be converted to useful work, e.g., in the form of useful electrical power. The wind turbine of the invention using Newton's First Law of Linear Motion may thus converts as much as 35 percent or more of wind kinetic energy to useful electrical power:

$$100 \times 95\% \times 51\% \times 72.5\% = 35.1\%$$

95% is the wind utilized and not bypassed around the turbine.

51% is the conversion of kinetic energy to rotor horsepower output.

72.5% remainder after electro-mechanical losses of generator/inverter. No gearbox.

These and other objects and advantages of the present invention will be readily appreciated from the following description of preferred embodiments of the invention and from the accompanying drawings and claims.

BRIEF DESCRIPTION OF THE DRAWINGS

The nature and mode of operation of the present invention will now be more fully described in the following detailed description a preferred embodiment of the invention taken with the accompanying drawing figures, in which:

Figure 1 is a front view of a preferred embodiment of a turbine of the present invention;
Figure 2 is a top view of the preferred embodiment of the turbine shown in Figure 1;
Figure 3 is a top cross-sectional view of a turbine blade used in the turbine of the preferred embodiment of the present invention taken on line 3-3 of Figure 5;
Figure 4 is a side cross-sectional view of a turbine blade used in the turbine of the preferred embodiment of the present invention taken on line 4-4 of Figure 5;
Figure 5 is a front view of the turbine of a preferred embodiment of the present invention;
Figure 6 is a view of airflow relative to a turbine blade;
Figure 7 is a front view illustrating a hub of a preferred embodiment of the present invention;
Figure 8 is a side view illustrating a hub of a preferred embodiment of the present invention;
Figure 9 is a front view illustrating a structural flared enclosure of a preferred embodiment of the present invention;
Figure 10 is a top view illustrating the structural flared enclosure of a preferred embodiment of the present invention;
Figures 11a through 11d are top views illustrating the wind flow without blade displacement of the wind;
Figures 12a through 12d are top views illustrating the wind flow with blade displacement of the wind;
Figure 13 is a side cross-sectional view of a main housing assembly of the present invention;
Figure 14 is a side cross-sectional view of a main column and cap assembly of a preferred embodiment of the present invention;
Figure 15 is a side view of a preferred embodiment of a forward partition and lock down system of the present invention;
Figure 16 is a front view of a preferred embodiment of a forward partition and a main bearing of the present invention;
Figure 17 is a side view of a preferred embodiment of a rear partition and a main bearing of the present invention;
Figure 18 is a front view of a preferred embodiment of a rear partition and a main bearing of the present invention;
Figure 19 illustrates vectors of true wind, blade speed and apparent wind;
Figure 20 is a side view of a wind vane and rear cone door assembly of a preferred embodiment of the present invention; and,
Figure 21 illustrates alternative blade shapes of a preferred embodiment of the present invention showing apparatus controlling braking.

BEST MODES FOR CARRYING OUT THE INVENTION

Unless defined otherwise, all technical and scientific terms used herein have the same meaning as commonly understood to one of ordinary skill in the art to which this invention belongs. It should be appreciated that the term "true wind" is defined as the actual speed in the direction of the wind as it approaches the turbine. The direction of true wind is usually along the same axis as the rotation axis of a horizontal windmill or turbine. The term "apparent wind" as used herein means the speed and relative direction from which the wind appears to blow with reference to a moving blade. The "angle of the apparent wind" is the angle between the direction of the apparent wind relative to true wind. It should be appreciated that the term "wind turbine" is defined as an apparatus having an internal rotor having angular blades, surrounded by a circumferential wall, that' generates rotary mechanical power from the energy in a stream of fluid. The "front blade surface" is a surface of the blade receiving true wind. The "reverse blade surface" is a surface of the blade shielded from true wind. The central axis is also equivalent to the rotational axis and can be used interchangeably.

At the outset, it should be appreciated that like drawing numbers on different drawing views identify identical, or functionally similar, structural elements of the invention. While the present invention is described with respect to what is presently considered the preferred embodiments, it is to be understood that the invention as claimed is not limited to the disclosed embodiments.

Furthermore, it is understood that this invention is not limited to the particular methodology, materials and modifications described and, as such, may, of course, vary. It is also understood that the terminology used herein is for the purpose of describing particular embodiments only, and is not intended to limit the scope of the present invention, which is limited only by the appended claims.

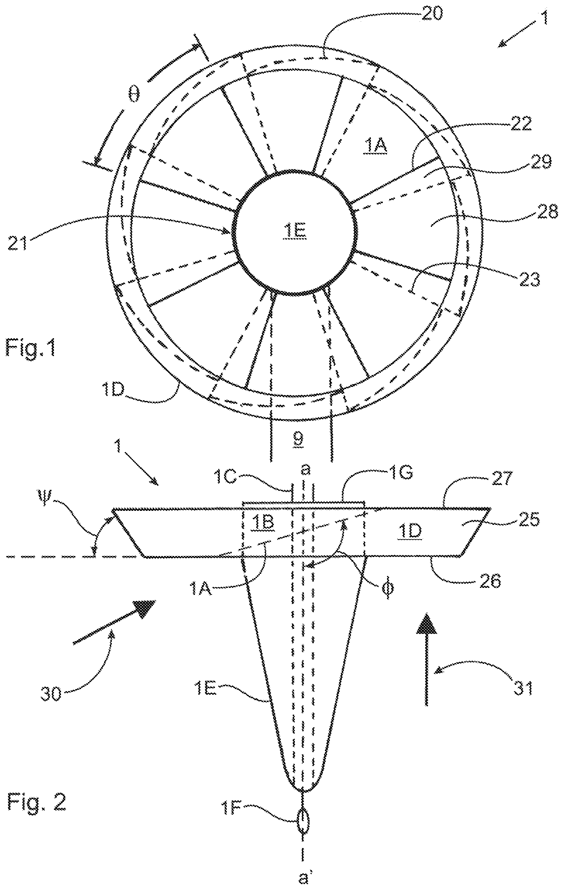

Referring now to the figures, Figures 1 thru 2 illustrates a preferred embodiment of a turbine assembly **1** having plurality of fixed pitch blades **1A** mounted on hub **1B** with axle **1C** and attached within enclosure **1D** as a single stage turbine and as a single rotating part. It should be understood that hub **1B** which maybe an axle or may form a part of an axle. Axle **1C** is projected forward and is enclosed within nose cone **1E** which also rotates with the turbine. Specifically, the turbine has eight fixed pitched blades. Each blade **1A** includes tip end **20** and hub end **21**. Each tip end **20** is equally spaced at angle (θ) of about 45° to central axis **a-a'**. Blade **1A** further comprises leading edge **22** and trailing edge **23** defining front surface **28** for receiving wind, wherein the number of blades is sufficient to entirely redirect direct wind impinging upon the turbine. Leading edge **22** of each blade **1A** overlaps trailing edge **23** of an adjacent blade defining overlap surface **29.** Preferably, leading edge **22** of each blade **1A** overlaps trailing edge **23** of an adjacent blade by an amount between 5% and 60% and more preferably from 14% and 20% of its surface area. Each blade **1A** having a fixed pitch such that pitch angle **(Φ)** of the blade at the tip end is from a range between 54 degrees to 75 degrees to rotational (central) axis **a-a'**.

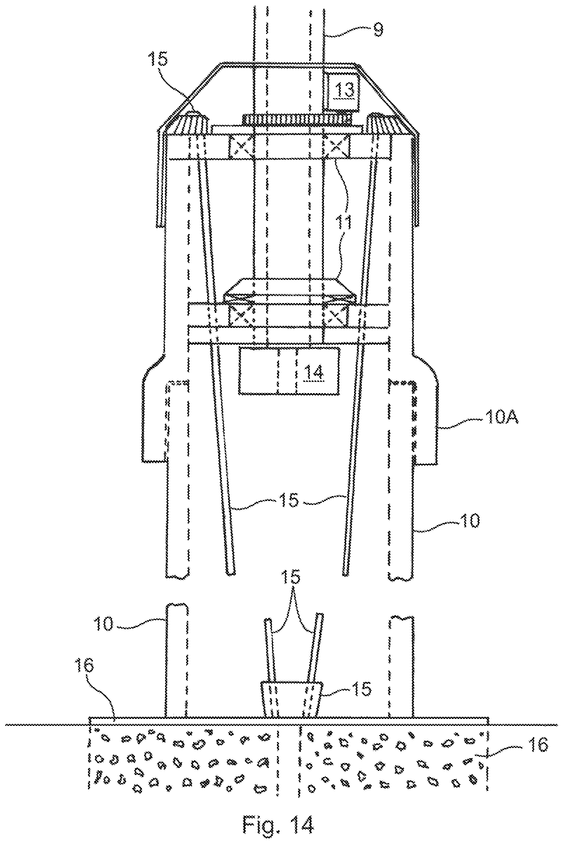

In the present embodiment, enclosure **1D** surrounds tip end **20** of the blades and is attached thereto. Enclosure **1D** is arranged to rotate with hub **1B** and blades **1A** about central axis **a-a'**. Enclosure **1D** includes circumferential sidewall **25** defining front opening **26** and rear opening **27**. Front opening **26** is adapted to face true wind **31**. Circumferential sidewall **25** is arranged about central axis **a-a'**. In should be understood that for the purpose of illustration true wind **31** is a direction along central axis **a-a'**. Sidewall **25** slopes from front opening **26** to rear opening **27** such that the rear opening has a larger diameter than the front opening. Preferably, sidewall **25** slopes from front opening **26** to rear opening **27** at angle **(ψ)** to a plane of the front opening between 100 degrees to 135 degrees, preferably from 107 degrees to 112 degrees. Figures 1 and 2 further illustrate top and front views of turbine assembly **1.** It should be appreciated that preferably, the turbine, itself, could be one solid casting. However, the individual parts of the turbine can be made separately and assembled to become one part with final assembly in the field. The components may be fabricated out of any substantially rigid material such as, for example metal or a reinforced plastic. Preferably, all of the components should be the same color. Nose cone **1E** is shaped to deflect air mass at the hub diameter into blades **1A** so that little of the kinetic energy is lost. The shape and curvature of the nose cone are determined for maximum efficiency. The axis supports the nose cone, which has a cast in receptacle to fit the axis. The aft end of nose cone **1E** is bolted and sealed to hub **1B**. The output signal of the wind direction servo **IF** is telemetered through the axis to orient the turbine into the wind by use of the gear motor shown in Figure 14. In a preferred embodiment, the nose cone is cast up in a mold using reinforced plastic.

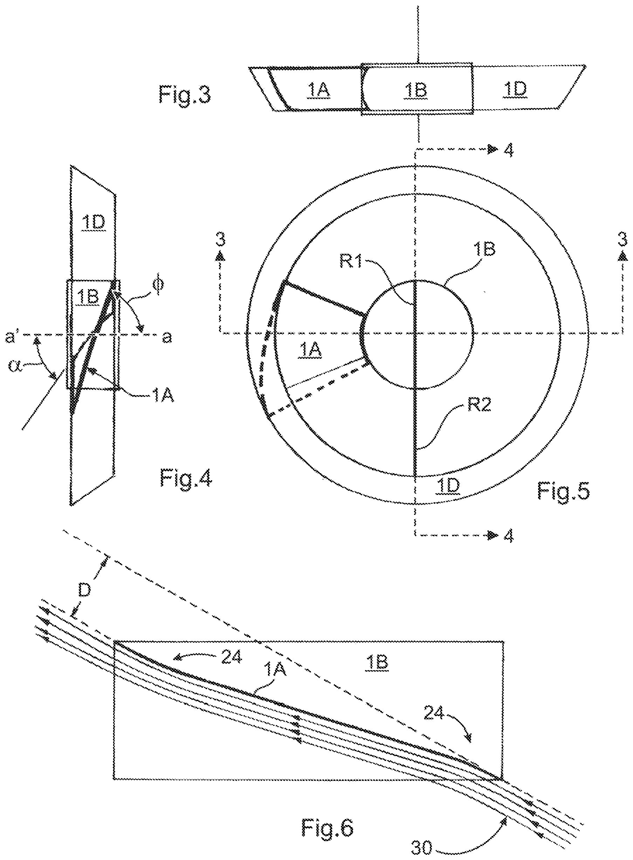

Figures 3 through 5 illustrate a plurality of turbine blades **1A**. Preferably, each of the blades is configured to include a precise compound curve. The primary curve determines the amount of displacement of the air mass as it passes through the turbine and is about eleven to twelve degrees with an eight-blade configuration, but may vary somewhat as related to the number and shape of the blades, the size of the turbine, and its determined rotation speed. The secondary curve is a twist from the blade tip to the blade base to accommodate the change in the blade circumference and its relative travel speed. Preferably, tip end **20** of blade **1A** is twisted at pitch angle **(Φ)** to the rotational (central axis) **a-a'** of an amount between 54 degrees to 75 degrees. Even more preferably from 58 degrees to 64 degrees. Specifically, the blade angle at the tip end may be twisted to 60 degrees. The blades are twisted such that hub end **21** of blade **1A** is twisted at angle **(α)** to rotational (central) axis **a-a'** of an amount between 28 degrees to 49 degrees. Specifically, the blade angle at the hub end may be 34 degrees. Even more specifically, the pitch of each of the blades at hub end **21** is defined by a product of a ratio, of hub radius **R1** divided by turbine radius **R2,** multiplied by a pitch angle at the tip. The pitch can vary, somewhat, in accordance with the relative hub diameter, the desired turbine rotation speed, and the established power curve for a specific turbine. It should be understood that many modifications of the blade configuration may be made without departing from the scope of the appended claims. For example, increasing or decreasing the number of blades and increasing or decreasing the overlap of the blades is well within the concept of the invention. Likewise, it is to be expected a somewhat different curvature of the blades may be determined that will further enhance efficiency.

Figure 6 is a top view of turbine blade **1A** as the airflow of apparent wind **30** moves along the blade as the blade rotates. Turbine blade **1A** includes compound curve **24.**

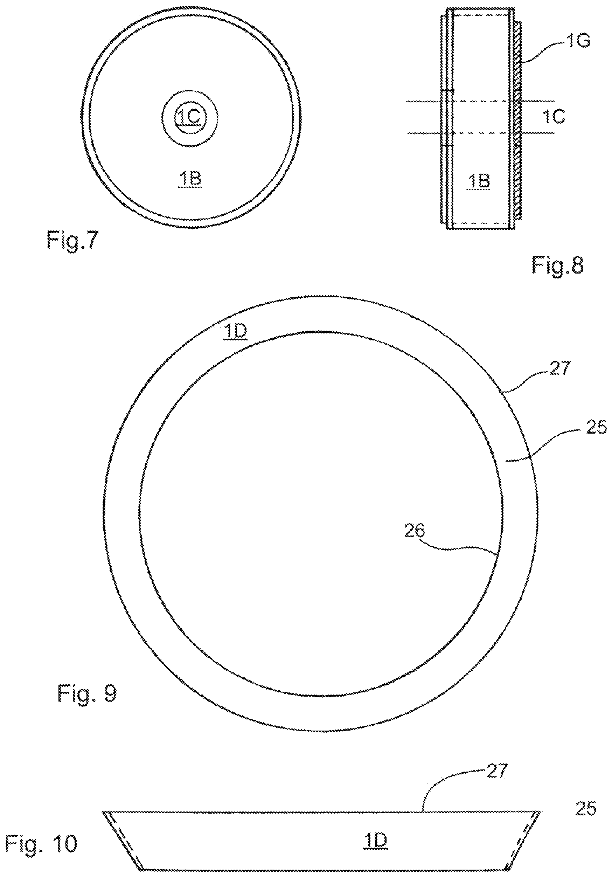

Figure 7 is a front view illustrating the hub of the present invention and Figure 8 is a side view illustrating the hub of the present invention. Turbine hub **1B** is secured to axle **1C** with the blades are mounted on hub **1B** outer periphery in a manner that provides structural integrity. Preferably, the base of the blades is secured from inside of the hub. Preferably, the turbine hub is to be essentially an aluminum pipe with end caps on the front and back to support axle **1C**. The back of the hub supports disc brake surface **1G** that is used to lock down the turbine. Axle **1C** is an aluminum pipe, which extends from the forward inside part of nose cone **1E** to the back end of generator armature **5B**. The wall thickness, diameter, and temper, are determined in accordance with good engineering practice for the loads and stresses expected with hurricane force winds for a specific turbine size.

Figure 9 and 10 illustrate the structural flared enclosure **1D** having sidewall **25** sloping from front opening **26** to rear opening **27** such that the rear opening has a larger diameter than the front opening. Enclosure **1D** is supported by a plurality of blades that are secured to the enclosure in a structurally integrated manner. Preferably, the blades are secured to the enclosure by drilling a bolt through the enclosure and down into the blade. Enclosure **1D** provides high strength and ruggedness to the turbine assembly since both ends of the blades are fully supported. Enclosure **1D** flairs outward from the front opening toward the back opening. The angle of flair is mathematically determined to expand the volume of the turbine from front to back by an amount proportional to the percent of energy extracted from the wind. For example, if 50% of the energy were extracted, the volume of the space within the turbine would need to increase by about 30% to prevent the air mass from slowing down. It is envisioned that the structural flared enclosure be made with a reinforced plastic to match the blades.

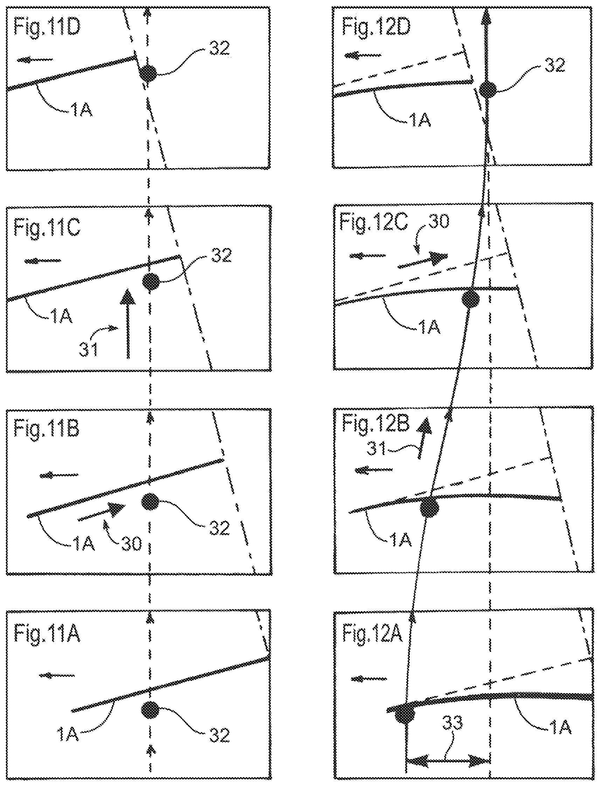

For purpose of illustration figures 11 and 12 show successive "snap shot" paths of true wind **31** as it impinges on the face of the turbine blade **1A**. Figures 11a through 11d are top views illustrating the wind flow without blade displacement of the wind. The figures show how air mass **32** passes straight through the turbine without touching blade **1A** if there is no blade curvature and blade **1A** are moving to match apparent wind **30**. The blades, effectively, move out of the way just in time. Figures 12a through 12d are top views illustrating the wind flow with blade displacement of the wind. True wind **31** is forced out of its path of motion by a curved blade with the same conditions as in Figure 11.

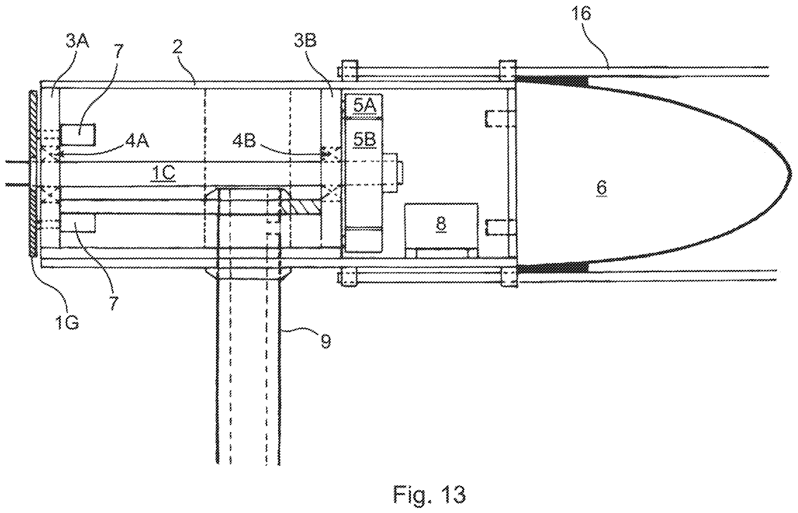

Figure 13 is a side cross-sectional view of the main housing assembly of the present invention. The rear portion of axle **1C** is supported within housing **2** which contains two partitions **3A** and **3B** at front and partly back, each containing main axle bearings **4A** and **4B**. The aft end of axle **1C** is attached to generator armature **5B** which rotates within generator stator **5A**. The generator is mounted in the rear portion of housing **2** on rear partition **3B**. Partitions **3A** and **3B** each have forward main bearing **4A** and rear main bearing **4B** secured, concentrically, in the middle of the partition for axle **1C**. These are permanent life time lubricated and sealed roller bearings designed to outlast the turbine life of at least 40 years because of the low speeds and light loads. These partitions are structurally secured within main housing **2**. Forward partition **3A** provides lock down system **7** using hydraulic cylinders and a disc brake surface **1G**. Rear partition **3B** has generator stator **5A** mounted directly upon the partition concentric with the axis and generator armature. Preferably, the partition may be made from a variety of non-magnetic material. Preferably, the partition is made out of aluminum. The generator comprises armature **5B** mounted concentrically within stator **5A**. The diameter of the stator is as large as is feasible within the space available on rear partition **3B**. The objective is to provide as high a peripheral speed as possible to cut the lines of magnetic force faster for higher voltages. The generator also has multiple poles, which are connected in series to increase the voltage at low wind speeds. The power controller/inverter **8** is shown in the control space behind the generator. Space is provided for a solid-state controller/inverter **8,** which regulates the turbine rotor output to the electrical load. The back end of the pipe housing is enclosed by cone shaped door **6,** which provides access to the control space by moving on slider/struts **12A**. The control of turbine speed is regulated by controller **8** that measures generator power output and modifies field current of the generator to load rotor to regulate rotation speed of the turbine to obtain at least 50% and preferably at least 80% of maximum generator power output under all wind conditions.

In the present embodiment, the assembly is mounted on a column **9** structurally secured within main housing **2** and which extends down into main support column **10** and enabled to rotate into the wind by use of a set of axial and thrust bearings **11**. Rear mounted wind vane **12** provides orientation into the wind, during storm power shortages, but it is also assisted by gear drive motor **13,** and wind direction servo **1F,** during normal conditions. The turbine can be locked down by use of lock down mechanism **7** and disc brake surface **1G**.

Figure 14 is a side cross-sectional view of the main column and cap assembly of the present invention. Upper column **9** is attached to main housing **2** and rotates with it. It is of slender design to minimize interference of the air stream leaving the turbine. It is a hollow aluminum pipe, which carries the power and control cables out of the generator and control system to slip ring assembly **14,** which allows the turbine to rotate freely without winding up the cables. Main support column **10** is mounted on a substantial concrete base that extends deep into the ground. A compression ring and tie down rod system **15** at the top of the column in the main column cap **10A**, extend down to the concrete base to a center connector to hold the entire column in compression. This provides powerful "tip over" resistance. The main support column can be constructed of reinforced concrete pipe of an appropriate diameter. A set of axial and thrust bearings **11** is located within main column cap **10A** at the top of main support column **10** just under tie down rod system **15** and supported by the top and sides of the main support column. This provides the means by which upper column **9** can turn freely so the turbine can face into the wind. Gear drive motor **13** is secured to upper column **9** and connected to main column **10** by a heavy-duty drive chain by which it can turn the entire wind turbine to face into the wind. A built in slip clutch prevents damage from strong wind gusts.

In the present embodiment, power output cables from the generator/inverter control space are connected to slip ring assembly **14** within cap **10A** of main support column **10** so the assembly can rotate freely without winding up the cables. The main control column is mounted on secure foundation **16** and held under compression by three tie down rods **15.** The wind turbine provides extraordinary efficiency with unusual simplicity utilizing a concept of physics known as "Newton's First Law of Linear Motion". This provides highly efficient energy extraction from the wind.

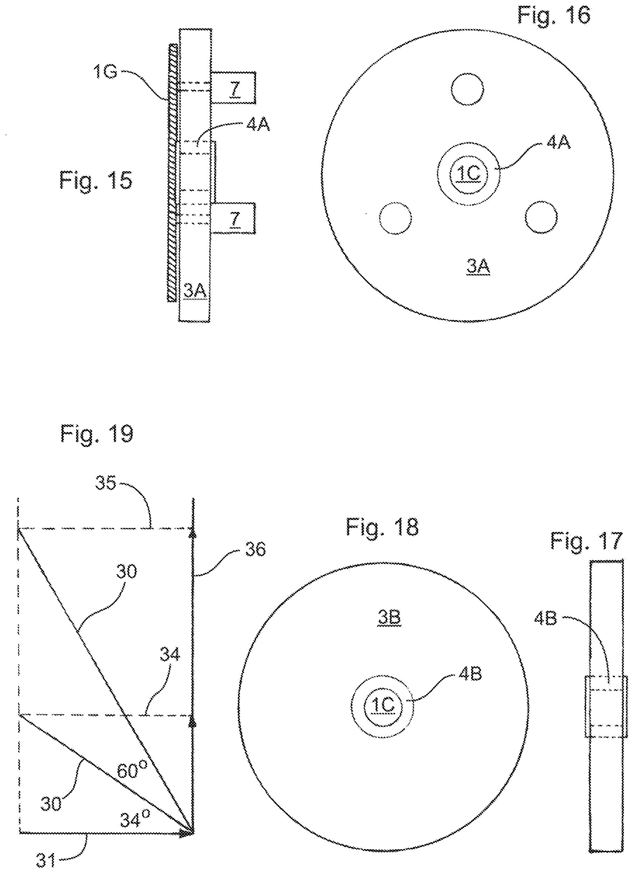

Figures 15, 16, 17, and 18 illustrate two partitions **3A** and **3B** each have forward main bearing **4A** and rear main bearing **4B** secured, concentrically, in the middle of the partition for axle **1C**. These partitions are structurally secured within main housing **2.** The disc brake surface **1G** of lock down mechanism **7** is mounted between the back of hub **1B** and the front of main housing **2** and operated with **3** pistons that are hydraulically operated to engage the discs to prevent rotation. This is a manual system that can be operated from within the control space or from the ground.

Figure 19 illustrates vectors of true wind **31**, blade speed **36** and apparent wind **30**. This vector diagram shows the relationship between the true wind speed and the rotor speed at blade tip **35** and blade base **34**. This defines the apparent wind angle and velocity as the hypotenuse of the triangle with one leg being the true wind speed and the other blade speed **36**. This mathematically defines the desired pitch angle of the turbine blades at their tip and at their base.

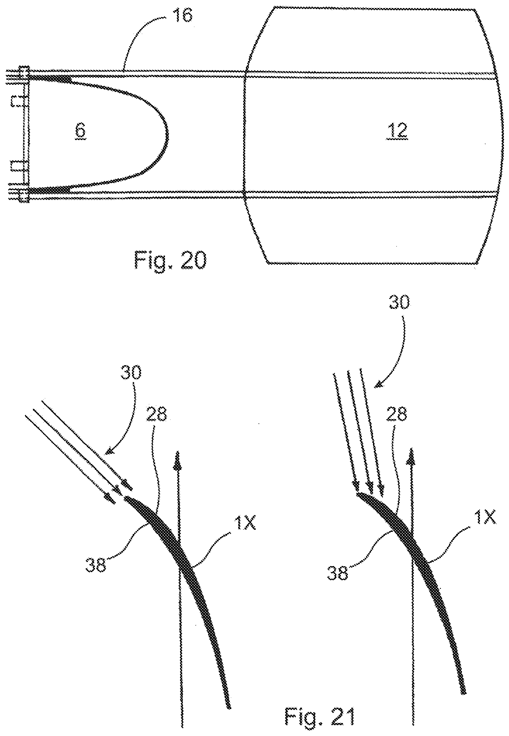

Figure 20 is a side view of the wind vane and the rear cone door assembly of the present invention. Wind vane **12** is secured to main housing **2** by two heavy-duty struts extending back and through the length of the vane. These struts are structurally designed to withstand strong forces on the wind vane as it orients the wind turbine into the wind. Wind vane **12** is constructed of a reinforced plastic sandwich panel with a foam core to be light weight, strong, and slightly flexible. the struts serve a second function as the rails for the rear cone door **6** when it is slid back for access to the control space in the main housing **2.** The cone is made of a reinforced plastic constructed in a mold similar to the front cone. The cone is shaped to aerodynamically minimize turbulence and maximize the laminar flow of the wind. The color dye in the plastic resin should match the rest of the wind turbine parts.

Figure 21 illustrates an alternate shape for turbine blade **1X** based on utilizing the backside of the blade to gain some extra advantage. The set of fixed pitch blades are shaped with a curvature on front blade surface **28** and a different curvature on reverse blade surface **38** to affect the apparent wind as seen by the moving blades of said turbine. The figure also shows how apparent wind **30** can back on the blade for self-regulating turbine speed control.

Thus, it is seen that the objects of the present invention are efficiently obtained, although modifications and changes to the invention should be readily apparent to those having ordinary skill in the art, which modifications are intended to be within the spirit and scope of the invention as claimed. It also is understood that the foregoing description is illustrative of the present invention and should not be considered as limiting. Therefore, other embodiments of the present invention are possible without departing from the spirit and scope of the present invention.

INDUSTRIAL APPLICABILITY

The present invention, utilizes Newton's First Law Of Linear Motion as a means of extracting energy from the wind. Newton's Law states, essentially, that an object moving in a straight line will continue moving in a straight line unless acted upon by an unbalanced force. By this concept a mass of air, entering the turbine, is forced out of its path of motion by curved fixed pitch turbine blades. This causes a force, which drives the turbine. As the turbine rotates, the moving blades cause an apparent wind that is the vector angle hypotenuse of the triangle between the true wind speed entering the turbine and the peripheral speed of the blades. When the apparent wind angle is caused to be the same as the pitch of the blades, the turbine can deliver maximum power. A controller regulates the output of a generator to load the turbine to control the turbine speed for continuous maximum output for all wind conditions. This concept results in a wind turbine of exceptional efficiency, low cost, and small size.

The present embodiment, by use of the law of physics attributed to Sir Isaac Newton and known as his First Law of Linear Motion, and applying this concept as a means of extracting energy from the wind, and by using special techniques to utilize the concept, provides a new level of high efficiency that surpasses other methods for generating economical electrical power, especially as highly desirable renewable energy. As a result, for equivalent annual power output from the wind, the present embodiment can be one sixth the diameter, and need be mounted only one third to one half as high, at one tenth the cost of the very popular three-blade windmills now proliferating across the world. The smaller size and lower cost opens enormous new markets as it becomes cost effective without government grants, subsidies, or tax abatements. The market for homes, agricultural farms, and small businesses is huge as this wind turbine can supply all of their heat and power at a tiny fraction of current utility costs. It can be easily mounted on top of commercial buildings with little structural modification. There is no other known product available for the markets that can generate the level of power that is required to supply all the heat and electricity for a home or business in such a small unit and at such a low cost. Because the turbine turns at low speeds with the blades enclosed, the rotation is not evident except when up close; there is no television interference, nor flickering shadows.

In a preferred embodiment, overlapping blades provide no apparent opening when viewed straight on; hence, birds will not fly into device more frequently than they would fly into the side of a building. The design provides a turbine that is silent in operation and non-intrusive in appearance. In fact, these turbines, because they are small and can be just above the treetops and, can easily blend into the landscape if properly placed. Because the airflow through the present embodiment is straight through, with virtually no turbulence, these turbines can be placed close together on a rotating platform. Thus, the applications increase as a multiple of turbines can supply a wide variety of user requirements with just one installation on a single pedestal, or on a building, and with no large land requirement.

Because of the small size and high efficiency, the wind turbine can be placed near the user who then avoids the delivery costs of power transmission from wind farms and large power plants. This is an additional major saving since costs of delivering power over a considerable distance are often more than the power itself. The present embodiment may be equipped with battery energy storage of several days, which would be capable of supplying reactive power to the grid for several hours, during peak power requirements, even when the wind is not blowing. This is a major opportunity to enhance the total power generation in the country at the lowest possible cost. The invention is intended to cover embodiments in addition to the preferred embodiments shown in the drawings and described herein.

It is anticipated that in future embodiments, modifications of the blade configuration and the structural flared enclosure may be made. For example, more or fewer blades, with more or less overlapping of the blades would be logical developments in the quest for greater and greater efficiency. Likewise, it is to be expected that a different curvature of the blades might be found that will enhance efficiency.

In like manner, the structural flared enclosure might be improved by providing a curve to the flair in conjunction with a change in the degree of flair, and the depth of the enclosure.

Figure 21 shows an alternate blade shape that that utilizes the flow of the apparent wind along the backside of each blade. By careful analysis of the interrelated effects of the number of blades, their overlap, their shape and curvature, greater efficiency may be achieved.

Further, within the general concept of the present invention, it is expected that improvements may be made to the nose cone and the rear cone to improve laminar flow of the air stream and directing it as desired for maximum efficiency of the wind turbine.

In an initial test of the wind turbine of the present invention, turbine output was obtained as high as 40% of the kinetic energy of input wind as determined by output torque and turbine speed.

SEQUENCE LISTING FREE TEXT

| 1 | turbine assembly |
|---|---|
| 1A | turbine blade |
| 1B | turbine hub |
| 1C | turbine axle |
| 1D | structural flared enclosure |
| 1E | nose cone |
| 1F | wind direction servo |
| 1G | disc brake surface |
| 2 | main housing |
| 3A | forward partition |
| 3B | rear partition |
| 4A | forward main bearing |
| 4B | rear main bearing |
| 5A | generator stator |
| 5B | generator armature |
| 6 | rear cone and door |
| 7 | lock down mechanism |
| 8 | inverter and power controller |
| 9 | upper column |
| 10 | main column |
| 10A | main column cap |
| 11 | column bearings axial and thrust |
| 12 | wind vane |
| 12A | struts and slider system |
| 13 | gear/clutch turning motor |
| 14 | slip ring assembly |
| 15 | tie down rod system |
| 16 | concrete foundation and pad |
| 20 | tip end of blade |
| 21 | hub end of blade |
| 22 | leading edge of blade |
| 23 | trailing edge of blade |
| 24 | compound curve |
| 25 | circumferential sidewall |
| 26 | front opening |
| 27 | rear opening |
| 28 | front blade surface |
| 29 | overlap surface |
| 30 | apparent wind |
| 31 | true wind |
| 32 | air mass |
| 33 | displacement |
| 34 | base |
| 35 | tip |
| 36 | blade speed |
| 38 | reverse blade surface |
| ($\Phi$) | pitch angle at tip end of blade |
| ($\alpha$) | pitch angle at hub end of blade |
| ($\psi$) | slope angle of sidewall |
| ($\theta$) | angle between blades |

**Claims**

1.  A wind turbine (1) comprising:

    a set of curved blades (1A) mounted on a central rotatable hub (1B), an enclosure (1D) surrounding the tips (20) of the blades (1A) and attached thereto, which enclosure is arranged to rotate with said hub (1B) and said blades (1A), **characterized in that** each of said blades (1A) has a leading edge (22) and a trailing edge (23) and a pitch angle to a rotational axis (1C) of the hub (1B) at the leading edge (22), which angle is an angle between the hypotenuse of a triangle, having a first leg defined by true wind speed and the other leg defined by blade speed (36), and the leg defined by true wind (31) speed and the pitch angle of the leading edge (22) of the blade (1A) at the tip end (20) is from 54 degrees to 75 degrees to a rotational (central) axis of the hub and the pitch angle of the blade (1A) at the hub end (21) is between 28 and 49 degrees to the rotational axis (1C) of the hub (1B), and each of the blades (1A) is provided with a compound curve that causes the blade (1A) to fall away from an angle of apparent wind (30) at a wind entry of location of the blade (1A) so that the surface of the blade (1A) is forced to move from the apparent wind (30), said turbine (1) being further provided with an apparatus (1G) that controls speed of rotation of the turbine (1) so that the angle of the apparent wind (30) to the leading edge (22) of the blades (1A) can be adjusted relative to the pitch angle of the blades (1A) to obtain at least 50% of maximum energy that can be extracted using the turbine (1).

2. The wind turbine (1) recited in Claim 1, wherein the enclosure (1D) has a circumferential sidewall about a central axis (1C), said circumferential sidewall defining a front opening being adapted to face true wind (31), and a rear opening; said sidewall sloping from said front opening to said rear opening such that the rear opening has a larger diameter than the front opening.

3. The wind turbine (1) recited in Claim 2, wherein said sidewall slopes from said front opening to said rear opening at an angle to a plane of said front opening between 100 degrees to 135 degrees.

4. The wind turbine (1) recited in Claim 3, wherein said sidewall slopes from said front opening to said rear opening at an angle to a plane of said front opening between 107 degrees to 112 degrees.

5. The wind turbine (1) recited in Claim 1, wherein each of said blades (1A) has a leading edge (22) and a trailing edge (23) defining a surface for receiving wind, wherein the number of blades (1A) being sufficient to entirely redirect direct wind impinging upon the turbine (1).

6. The wind turbine (1) recited in Claim 5, wherein the leading edge (22) of each of the blades (1A) overlaps the trailing edge (23) of an adjacent blade (1A) by an amount between 5% and 60% of its surface area.

7. The wind turbine (1) recited in Claim 1, wherein each of said blades (1A) is twisted such that the tip end (20) of said blade (1A) is twisted at an angle to the central axis (1C) of an amount between 58 degrees to 64 degrees.

8. The wind turbine (1) recited in Claim 1, wherein a nose cone (1E) is provided at the front of the turbine face covering the hub (1B), and which is streamlined to transfer an air mass, approaching the turbine (1), to be directed around said hub (1B) and into said blades (1A) so that kinetic energy in said air mass is captured.

9. The wind turbine (1) recited in Claim 1, the turbine (1) is connected to a multi-pole generator having poles connected in series and of sufficient size to provide a higher output voltage relative to the output of a dipole generator.

10. The wind turbine (1) recited in Claim 9, wherein the control of turbine speed is regulated by a controller that measures generator power output and modifies field current of the generator to load rotor to regulate rotation speed of the turbine to obtain at least 50% of maximum generator power output under all wind conditions.

11. The wind turbine (1) recited in Claim 10, wherein the control of turbine speed is regulated by a controller that measures generator power output and modifies field current of the the generator to load rotor to regulate rotation speed of the turbine to obtain at least 80% of maximum generator power output under all wind conditions.

12. The wind turbine (1) recited in Claim 11, wherein an inverter is connected to the generator output with apparatus to provide the maximum electrical output of the generator under all normal wind conditions for delivery to the user.

13. The wind turbine(1) recited in Claim 1, wherein said set of fixed pitch blades are of such number that they overlap each other as viewed straight on from the front of the turbine.

14. The wind turbine (1) recited in Claim 1, wherein said set of fixed pitch blades are shaped with a curvature on a front blade surface and a different curvature on a reverse blade surface to affect the apparent wind (30) as seen by the moving blades (1A) of said turbine (1).

15. The wind turbine (1) recited in Claim 6, wherein the leading edge (24) of each of the blades (1A) overlaps the trailing edge (23) of an adjacent blade (1A) by an amount between 14% and 20% of its surface area.

**Patentansprüche**

1. Windturbine (1), welche aufweist:

einen Satz von gebogenen Flügeln (1A), welche auf einer zentralen drehbaren Nabe (1B) angeordnet sind, einem Gehäuse (1D), welches die Spitzen (20) der Flügel (1A) umgibt und daran befestigt ist, wobei das Gehäuse so angeordnet ist, dass es sich mit der Nabe (1B) und den Flügeln (1A) dreht, **dadurch gekennzeichnet, dass** jeder der Flügel (1A) eine Vorderkante (22) und eine Hinterkante (23) und einen Neigungswinkel zu einer Rotationsachse (1C) der Nabe (1B) an der Vorderkante (22) aufweist, wobei der Winkel ein Winkel zwischen der Hypotenuse eines Dreiecks, welches einen ersten Schenkel, definiert durch die tatsächliche Windgeschwindigkeit, und den weiteren Schenkel, definiert durch die Flügelgeschwindigkeit (36), und den Schenkel, definiert durch den tatsächlichen Wind (31), aufweist, ist, und der Neigungswinkel der Vorderkante (22) des Flügels (1A) an dem Spitzenende (20) von 54 Grad bis 75 Grad zu einer (zentralen) Drehachse der Nabe beträgt und der Neigungswinkel des Flügels (1A) an dem Nabenende (21) zwischen 28 und 49 Grad zu der Drehachse (1C) der Nabe (1B) liegt, und wobei jeder der Flügel (1A) mit einer Verbindungskurve ausgestattet ist, welche den Flügel (1A) dazu veranlasst, von einem Winkel von scheinbarem Wind (30) bei einem Windeintritt an dem Ort des Flügels (1A) abzufallen, so dass die Oberfläche des Flügels (1A) dazu veranlasst wird, sich von dem scheinbaren Wind (30) wegzubewegen, wobei die Turbine (1) weiterhin mit einer Vorrichtung (1G) ausgestattet ist, welche die Drehgeschwindigkeit der Turbine (1) so steuert, dass der Winkel des scheinbaren Windes (30) zu der Vorderkante (22) der Flügel (1A) relativ zu dem Neigungswinkel der Flügel (1A) eingestellt werden kann, um mindestens 50% der maximalen Energie zu erhalten, welche durch Verwendung der Turbine (1) extrahiert werden kann.

2. Windturbine (1) nach Anspruch 1, wobei das Gehäuse (1D) eine um eine zentrale Achse (1C) umlaufende Seitenwand aufweist, wobei die umlaufende Seitenwand eine vordere Öffnung, welche dafür geeignet ist, zum tatsächlichen Wind (31) zu zeigen und eine hintere Öffnung aufweist, wobei sich die Seitenwand von der vorderen Öffnung zu der hinteren Öffnung hin aufweitet, so dass die hintere Öffnung einen größeren Durchmesser als die vordere Öffnung hat.

3. Windturbine (1) nach Anspruch 2, wobei sich die Seitenwand von der vorderen Öffnung zu der hinteren Öffnung hin in einem Winkel zu einer Fläche der vorderen Öffnung zwischen 100 Grad bis 135 Grad aufweitet.

4. Windturbine (1) nach Anspruch 3, wobei sich die Seitenwand von der vorderen Öffnung zu der hinteren Öffnung hin in einem Winkel zu einer Fläche der vorderen Öffnung zwischen 107 Grad bis 112 Grad aufweitet.

5. Windturbine (1) nach Anspruch 1, wobei jeder der Flügel (1A) eine Vorderkante (22) und eine Hinterkante (23) aufweist, welche eine Oberfläche zur Aufnahme von Wind definiert, wobei die Anzahl von Flügeln (1A) ausreicht, um direkten Wind, welcher auf die Turbine (1) einwirkt, komplett umzuleiten.

6. Windturbine (1) nach Anspruch 5, wobei die Vorderkante (22) jeder der Flügel (1A) mit der Hinterkante (23) eines benachbarten Flügels (1A) zu einem Anteil zwischen 5% und 60% des Oberflächenbereichs des Flügels überlappt.

7. Windturbine (1) nach Anspruch 1, wobei jeder der Flügel (1A) so gedreht ist, dass das Spitzenende (20) des Flügels (1A) in einem Winkel zu der zentralen Achse (1C) zwischen 58 Grad bis 64 Grad gedreht ist.

8. Windturbine (1) nach Anspruch 1, wobei ein Nasenkonus (1E) an der Vorderseite der Turbinenfläche, welche die Nabe (1B) abdeckt, vorgesehen ist, und welcher stromlinienförmig gestaltet ist, um eine Luftmasse zu übertragen, welche sich der Turbine (1) nähert, um um die Nabe (1B) herumgeführt und in die Flügel (1A) gelenkt zu werden, so dass kinetische Energie in dieser Luftmasse erfasst wird.

9. Windturbine (1) nach Anspruch 1, wobei die Turbine (1) mit einem hochpoligen Generator verbunden ist, welcher Pole aufweist, welche in Reihe verbunden sind und eine ausreichende Größe aufweisen, um eine höhere Leistungsspannung relativ zu der Leistung eines Dipolgenerators bereitzustellen.

10. Windturbine (1) nach Anspruch 9, wobei die Steuerung der Turbinengeschwindigkeit durch einen Regler reguliert wird, welcher die Generatorausgangsleistung misst und den Feldstrom des Generators ändert, um den Rotor zu laden, um die Rotationsgeschwindigkeit der Turbine zu regulieren, um mindestens 50% der maximalen Generatorausgangsleistung bei allen Windbedingungen zu erhalten.

11. Windturbine (1) nach Anspruch 10, wobei die Steuerung der Turbinengeschwindigkeit durch einen Regler reguliert wird, welcher die Generatorausgangsleistung misst und den Feldstrom des Generators ändert, um den Rotor zu belasten, um die Rotationsgeschwindigkeit der Turbine zu regulieren, um mindestens 80% der maximalen Generatorausgangsleistung bei allen Windbedingungen zu erhalten.

**12.** Windturbine (1) nach Anspruch 11, wobei ein Wechselrichter mit dem Generatorausgang verbunden ist, mit einer Vorrichtung, um den maximalen elektrischen Ausgang des Generators bei allen normalen Windbedingungen für die Übergabe an den Benutzer bereitzustellen.

**13.** Windturbine (1) nach Anspruch 1, wobei der Satz von Flügeln mit festgelegtem Neigungswinkel eine Anzahl aufweisen, dass sie sich, gesehen von der Vorderseite der Turbine aus, gegenseitig überlappen.

**14.** Windturbine (1) nach Anspruch 1, wobei der Satz von Flügeln mit festgelegtem Neigungswinkel mit einer Krümmung auf einer vorderen Oberfläche des Flügels und mit einer anderen Krümmung auf einer hinteren Oberfläche des Flügels ausgebildet sind, um den scheinbaren Wind (30), gesehen von den sich bewegenden Flügeln (1A) der Turbine (1), zu beeinflussen.

**15.** Windturbine (1) nach Anspruch 6, wobei die Vorderkante (22) jeder der Flügel (1A) mit der Hinterkante (23) eines benachbarten Flügels (1A) zu einem Anteil zwischen 14% und 20% des Oberflächenbereichs des Flügels überlappt.

## Revendications

**1.** Turbine éolienne (1) comprenant :

un ensemble de pales courbes (1A) monté sur un moyeu rotatif central (1B), une enceinte (1D) entourant les pointes (20) des pales (1A) et attachée à celles-ci, laquelle enceinte est conçue pour tourner avec ledit moyeu (1B) et lesdites pales (1A), **caractérisée en ce que** chacune desdites pales (1A) a un bord d'attaque (22) et un bord de fuite (23) et un angle d'attaque par rapport à un axe de rotation (1C) du moyeu (1B) au niveau du bord d'attaque (22), lequel angle est un angle entre l'hypoténuse d'un triangle, ayant une première branche définie par la vitesse du vent réel et l'autre branche définie par la vitesse des pales (36), et la branche définie par la vitesse du vent réel (31) et l'angle d'attaque du bord d'attaque (22) de la pale (1A) à l'extrémité côté pointe (20) est de 54 degrés à 75 degrés par rapport à un axe (central) de rotation du moyeu et l'angle d'attaque de la pale (1A) à l'extrémité côté moyeu (21) est compris entre 28 et 49 degrés par rapport à l'axe de rotation (1C) du moyeu (1B), et chacune des pales (1A) possède une courbe composée selon laquelle la pale (1A) diminue d'un angle de vent apparent (30) en un point d'entrée du vent sur la pale (1A) de telle sorte que la surface de la pale (1A) soit forcée à s'écarter du vent apparent (30), ladite turbine (1) étant en outre pourvue d'un appareil (1G) qui commande la vitesse de rotation de la turbine (1) de telle sorte que l'angle du vent apparent (30) par rapport au bord d'attaque (22) des pales (1A) puisse être réglé par rapport à l'angle d'attaque des pales (1A) pour obtenir au moins 50 % de l'énergie maximale qui peut être extraite à l'aide de la turbine (1).

**2.** Turbine éolienne (1) selon la revendication 1, dans laquelle l'enceinte (1D) a une paroi latérale circonférentielle autour d'un axe central (1C), ladite paroi latérale circonférentielle définissant une ouverture avant adaptée pour faire face au vent réel (31), et une ouverture arrière ; ladite paroi latérale partant en pente de ladite ouverture avant vers ladite ouverture arrière de telle sorte que l'ouverture arrière ait un plus grand diamètre que l'ouverture avant.

**3.** Turbine éolienne (1) selon la revendication 2, dans laquelle ladite paroi latérale part en pente de ladite ouverture avant vers ladite ouverture arrière selon un angle par rapport à un plan de ladite ouverture avant compris entre 100 degrés et 135 degrés.

**4.** Turbine éolienne (1) selon la revendication 3, dans laquelle ladite paroi latérale part en pente de ladite ouverture avant vers ladite ouverture arrière selon un angle par rapport à un plan de ladite ouverture avant compris entre 107 degrés et 112 degrés.

**5.** Turbine éolienne (1) selon la revendication 1, dans laquelle chacune desdites pales (1A) a un bord d'attaque (22) et un bord de fuite (23) définissant une surface de réception du vent, le nombre de pales (1A) étant suffisant pour rediriger entièrement le vent direct incident sur la turbine (1).

**6.** Turbine éolienne (1) selon la revendication 5, dans laquelle le bord d'attaque (22) de chacune des pales (1A) chevauche le bord de fuite (23) d'une pale adjacente (1A) d'une quantité comprise entre 5 % et 60 % de sa superficie.

**7.** Turbine éolienne (1) selon la revendication 1, dans laquelle chacune desdites pales (1A) est vrillée de telle sorte que l'extrémité côté pointe (20) de ladite pale (1A) soit vrillée selon un angle par rapport à l'axe central (1C) compris entre 58 degrés et 64 degrés.

**8.** Turbine éolienne (1) selon la revendication 1, dans laquelle une pointe avant (1E) est prévue à l'avant de la façade de la turbine, recouvrant le moyeu (1B), et profilée de façon à transférer une masse d'air, approchant de la turbine (1), pour la diriger autour dudit moyeu (1B) et dans lesdites pales (1A) de telle sorte que l'énergie cinétique contenue dans ladite masse d'air soit capturée.

9. Turbine éolienne (1) selon la revendication 1, la turbine (1) étant connectée à un générateur multipolaire ayant des pôles connectés en série et une taille suffisante pour fournir une tension de sortie plus élevée que la sortie d'un générateur bipolaire.

10. Turbine éolienne (1) selon la revendication 9, dans laquelle la commande de vitesse de la turbine est régulée par un contrôleur qui mesure la puissance de sortie du générateur et qui modifie le courant d'excitation du générateur pour charger le rotor afin de réguler la vitesse de rotation de la turbine pour obtenir au moins 50 % de la puissance de sortie maximale du générateur dans toutes les conditions de vent.

11. Turbine éolienne (1) selon la revendication 10, dans laquelle la commande de vitesse de la turbine est régulée par un contrôleur qui mesure la puissance de sortie du générateur et qui modifie le courant d'excitation du générateur pour charger le rotor afin de réguler la vitesse de rotation de la turbine pour obtenir au moins 80 % de la puissance de sortie maximale du générateur dans toutes les conditions de vent.

12. Turbine éolienne (1) selon la revendication 11, dans laquelle un onduleur est connecté à la sortie du générateur avec un appareil pour produire la sortie électrique maximale du générateur dans toutes les conditions de vent normales, pour la délivrer à l'utilisateur.

13. Turbine éolienne (1) selon la revendication 1, dans laquelle les pales à pas fixe dudit ensemble sont en nombre tel qu'elles se chevauchent les unes les autres tel que vu directement depuis l'avant de la turbine.

14. Turbine éolienne (1) selon la revendication 1, dans laquelle les pales à pas fixe dudit ensemble sont configurées avec une certaine courbure sur une surface de pale avant et une courbure différente sur une surface de pale opposée afin d'influencer le vent apparent (30) tel qu'observé par les pales en mouvement (1A) de ladite turbine (1).

15. Turbine éolienne (1) selon la revendication 6, dans laquelle le bord d'attaque (24) de chacune des pales (1A) chevauche le bord de fuite (23) de la pale adjacente (1A) d'une quantité comprise entre 14 % et 20 % de sa superficie.

Fig.1

Fig. 2

Fig.3

Fig.4

Fig.5

Fig.6

Fig.7

Fig.8

Fig. 9

Fig. 10

Fig. 13

Fig. 14

Fig. 16

Fig. 15

1G

7

4A

7

3A

4A

1C

3A

Fig. 19

35

36

30

34

30

60°

30

34°

31

Fig. 18

3B

4B

1C

4B

Fig. 17

4B

16

6

12

Fig. 20

30

30

28

28

1X

1X

38

38

Fig. 21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61269183 A
- DE 712532
- WO 8707328 A
- FR 1290018
- US 4021135 A, Pedersen
- US 4140433 A, Eckel
- US 4611125 A, Stone Jr.
- US 7396207 B, DeLong
- US 4150301 A, Bergey
- US 7214029 B, Richter
- US 20080232957 A, Presz
- US 5525037 A, Cummings
- US 4619585 A, Storm
- US 7362004 B, Becker
- US 7116006 B, McCoin